# EUROPÄISCHE PATENTSCHRIFT

(11) **EP 1 893 457 B1**
(45) Veröffentlichungstag und Bekanntmachung des Hinweises auf die Patenterteilung: **23.09.2009**
(21) Anmeldenummer: 06763644.9
(22) Anmeldetag: 12.06.2006
(51) Int. Cl.: B60S 1/04

(54) **SCHEIBENWISCHVORRICHTUNG**
WINDSHIELD WASHER DEVICE
SYSTEME D'ESSUIE-GLACE

(30) Priorität: 10.06.2005 DE 102005028118; 10.10.2005 DE 102005048341
(43) Veröffentlichungstag der Anmeldung: 05.03.2008
(73) Patentinhaber: ROBERT BOSCH GMBH, 70442 Stuttgart (DE)
(72) Erfinder: RITT, Jean-Marc, F-67000 Strasbourg (FR)
(86) Internationale Anmeldenummer: PCT/EP2006/063103
(87) Internationale Veröffentlichungsnummer: WO 2006/131567

(56) Entgegenhaltungen:
- EP-A- 0 950 586
- WO-A-20/06072486
- DE-A1- 10 327 858
- FR-A- 2 853 606

## Beschreibung

Die Erfindung betrifft eine Scheibenwischvorrichtung, insbesondere für ein Kraftfahrzeug, mit einer Befestigungseinrichtung zur Befestigung der Scheibenwischvorrichtung am Kraftfahrzeug.

Bisher werden Scheibenwischvorrichtungen hauptsächlich mittels Verschraubungen und Steckpunkten an der Fahrzeugkarosserie befestigt. Hierzu sind spezielle Werkzeuge, mehrere Montagehandgriffe und somit ein relativ hoher Zeitbedarf erforderlich.

Aus der DE-A-10327858 ist eine Scheibenwischvorrichtung mit den Merkmalen des Oberbegriffs des Anspruches 1 bekannt.

Die Erfindung hat die Aufgabe, den Montageaufwand zur Befestigung der Scheibenwischvorrichtung an der Fahrzeugkarosserie zu reduzieren.

Die Erfindung löst die gestellte Aufgabe mit einer Scheibenwischvorrichtung der eingangs genannten Art, die erfindungsgemäß durch die Befestigungseinrichtung an einem Karosserieblech einer Fahrzeugkarosserie festklemmbar ist. Auf diese Weise kann die Scheibenwischvorrichtung ohne Schrauben und Steckpunkte an der Fahrzeugkarosserie befestigt werden. Folglich erfordert die Montage der Scheibenwischvorrichtung deutlich weniger Zeit als früher. Spezielle Werkzeuge für die Montage können ebenfalls entfallen.

Die Befestigungseinrichtung kann mindestens ein federndes Klemmelement aufweisen, das insbesondere mit mindestens zwei Führungsflächen versehen ist. Zwischen die mindestens zwei Führungsflächen kann ein Karosserieblech eingeschoben werden. Durch die federnde Eigenschaft des Klemmelements können unterschiedliche Dicken des Karosserieblechs ausgeglichen werden.

Um die Karosserie zwischen den Führungsflächen einklemmen zu können, können die Führungsflächen gegeneinander bewegbar angeordnet sein.

Die Befestigungseinrichtung weist einen Schnapphebel, insbesondere aus Kunststoff auf, der mittels einer in einem Bügel gelagerten Achse exzentrisch und verschwenkbar gelagert ist. Durch das Verschwenken des Schnapphebels und seine exzentrische Lagerung können die Führungsflächen mit einem einzigen Handgriff gegeneinander bewegt werden, um die Scheibenwischvorrichtung an der Karosserie festzuklemmen.

Wenn der Bügel einen gewellten Bereich aufweist, dann wird dieser Bereich beim Verschwenken des Schnapphebels verlängert, wodurch die Wellen des gewellten Bereiches flacher werden. Auf diese Weise können Toleranzen bei der Dicke des Karosserieblechs ausgeglichen werden.

Die Befestigungseinrichtung kann mindestens einen Gummipuffer und/oder eine Distanzhülse aufweisen. Der Gummipuffer gleicht ebenfalls Toleranzen bei der Dicke des Karosserieblechs aus. Die Distanzhülse verhindert, dass der Gummipuffer zu stark komprimiert wird.

Damit die Distanzhülse zuverlässig verhindern kann, dass der Gummipuffer zu stark komprimiert wird, weist sie ein Innenloch auf, das sich rohrförmig zum Karosserieblech hin erstreckt.

Der Schnapphebel kann von länglicher Gestalt sein, um gut bedient werden zu können. Er kann durch eine Bewegung, insbesondere zwischen 40° und 100°, vorzugsweise zwischen 45° und 90°, quer zu seiner Längsachse arretiert werden. In dieser Stellung sind die Führungsflächen zueinander beabstandet, so dass das Karosserieblech zwischen die Führungsflächen eingeschoben werden kann.

Der Schnapphebel kann Stützflächen aufweisen, um ihn in einer Schließstellung, also nach erfolgter Montage, oder in einer Montagestellung, also zum Zweck der Montage, zu arretieren.

Damit das Klemmelement an der Karosserie des Kraftfahrzeuges arretiert werden kann, kann es mindestens ein Federbein aufweisen, das in eine Aussparung im Karosserieblech einrastbar ist.

Um den Schnapphebel in der Schließstellung zu sichern, kann er mit einem Haken versehen sein, der in der Schließstellung in eine dafür vorgesehene Aussparung eingreift.

Die Führungsflächen können an ihrer jeweils einander zugewandten Seite angeraut sein. Dadurch wird die Reibung der Führungsflächen an der Karosserie im eingeklemmten Zustand erhöht.

Besonders günstig in der Herstellung ist der Schnapphebel, wenn er aus einem unverstärkten oder faserverstärkten Kunststoff oder aus einem Metalldruckguss hergestellt ist.

Sehr einfach zu realisieren ist die Befestigung der Scheibenwischvorrichtung an der Karosserie, wenn die Befestigungseinrichtung an einem Formrohr angeordnet ist.

Nachfolgend wird ein bevorzugtes Ausführungsbeispiel anhand der beiliegenden Zeichnungen näher erläutert.

Im Einzelnen zeigen:
- Fig. 1: eine perspektivische Ansicht auf eine erfindungsgemäße Befes- tigungseinrichtung im geöffnete Zustand;
- Fig. 2: eine perspektivische Ansicht auf die erfindungsgemäße Befes- tigungsvorrichtung im geschlossenen Zustand;
- Fig. 3: eine perspektivische Ansicht von unten auf ein Federelement;
- Fig. 4: eine perspektivische Draufsicht auf das Federelement aus Fig. 3;
- Fig. 5: eine perspektivische Ansicht auf ein Karosserieblech;
- Fig. 6: eine perspektivische Seitenansicht auf einen Schnapphebel;
- Fig. 7: eine perspektivische Draufsicht auf eine Distanzhülse.

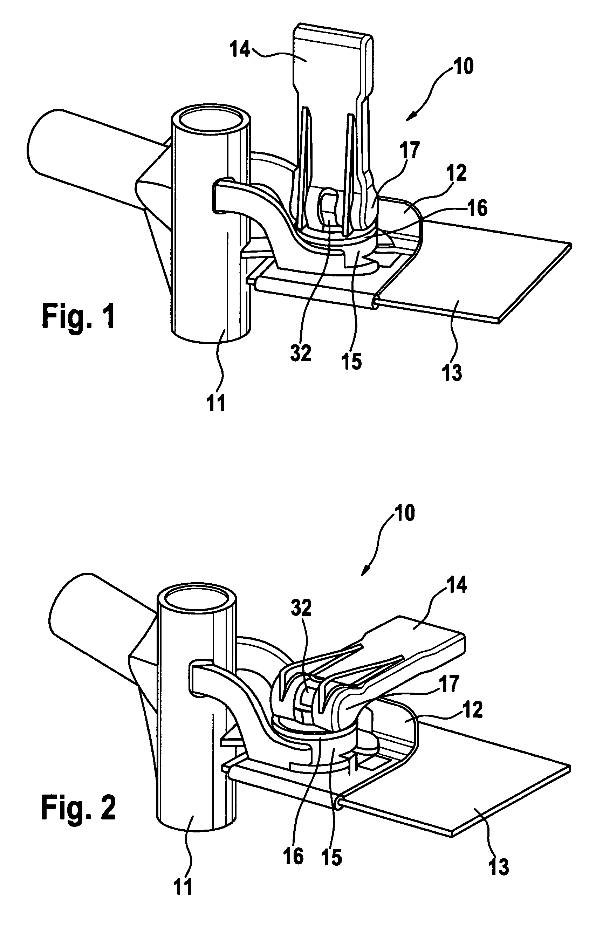

Die Fig. 1 und 2 zeigen eine Befestigungseinrichtung 10, die an einem Formrohr 11 angeordnet ist. Die Befestigungseinrichtung 10 weist ein Klemmelement 12, zwischen dem ein Karosserieblech 13 eingeklemmt ist, auf. Ferner ist die Befestigungseinrichtung 10 mit einem Schnapphebel 14, einen Gummipuffer 15 und einer Distanzhülse 16 versehen.

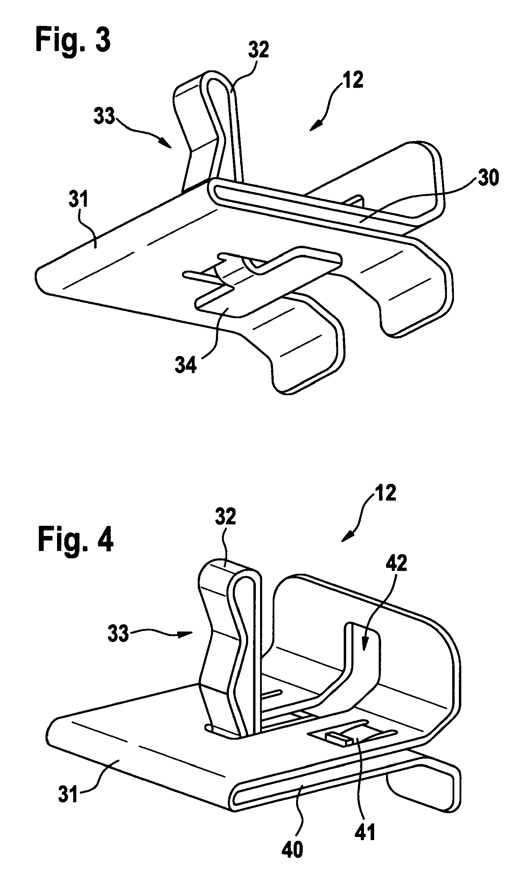

Das Klemmelement 12 weist zwei Führungsflächen 30 (siehe Fig. 3) und 40 (siehe Fig. 4) auf, zwischen die das Karosserieblech 13 geschoben werden kann. Die Führungsflächen 30 und 40 sind mittels eines umgebogenen Bereiches 31 federnd miteinander verbunden. Der umgebogene Bereich 31 dient auch als Anschlag für das Karosserieblech 13.

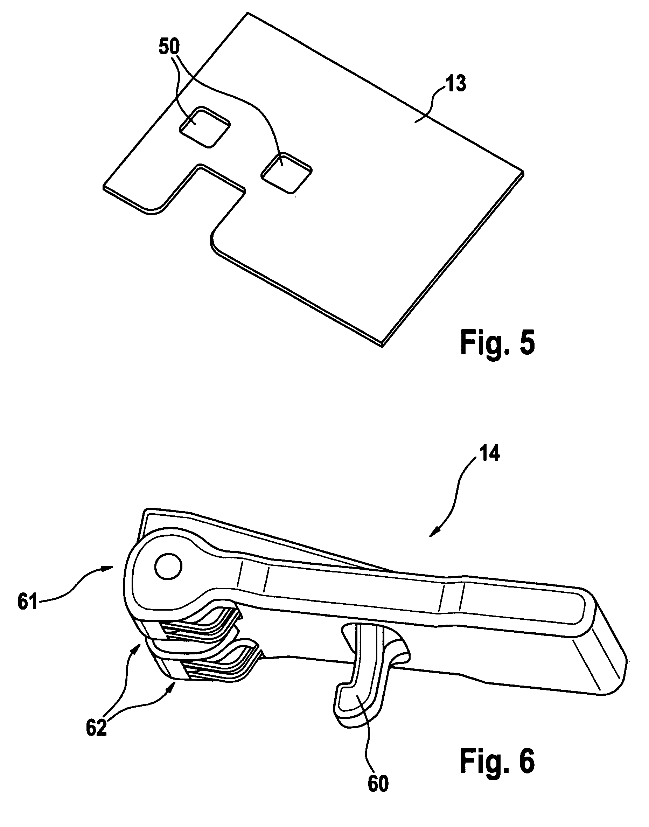

Das Klemmelement 12 weist einen Bügel 32 auf, der mit einem gewellten Bereich 33 versehen ist. Der Bügel 32 ist an seinem freien Ende mit einem Abstützelement 34 versehen, das von unten gegen die Unterseite der Führungsfläche 40 drückt (siehe Fig. 5).

Der Schnapphebel 14 ist mittels einer in dem Bügel 32 gelagerten Achse 17 exzentrisch und verschwenkbar gelagert (Fig. 1 und 2).

Zum Einschieben des Karosserieblechs 13 zwischen die Führungsflächen 30 und 40 befindet sich der Schnapphebel 14 in einer Montagestellung (siehe Fig. 1).

Sobald das Karosserieblech 13 zwischen die Führungsflächen 30 und 40 geschoben wurde, wird der Schnapphebel 14 nach rechts in eine Schließstellung verschwenkt. Durch die exzentrische Lagerung des Schnapphebels 14 auf der Achse 17 wird dieser bei seiner Verschwenkung nach rechts gleichzeitig nach oben gedrückt, wodurch der Bügel 32 nach oben gezogen wird. Gleichzeitig wird das Abstützelement 34 unten gegen die Unterseite der Führungsfläche 40 gedrückt, so dass das zwischen den Führungsflächen 30 und 40 befindliche Karosserieblech 13 festgeklemmt wird.

Das Klemmelement 12 ist mit zwei Federbeinen 41 versehen (siehe Fig. 4), die in in dem Karosserieblech 13 vorgesehene Aussparungen 50 (siehe Fig. 5) eingreifen. Dadurch wird das Karosserieblech 13 zwischen den beiden Führungsflächen 30 und 40 zusätzlich arretiert.

Der Schnapphebel 14 weist einen Haken 60 auf (siehe Fig. 6) der in eine Ausnehmung 42 im Klemmelement 12 eingreifen kann, um ein unbeabsichtigtes Öffnen des Schnapphebels 14 zu vermeiden.

Ferner ist der Schnapphebel 14 mit Stützflächen 61 und 62 (siehe Fig. 6) versehen, die den Schnapphebel 14 in seiner Schließstellung und in seiner Montagestellung arretieren.

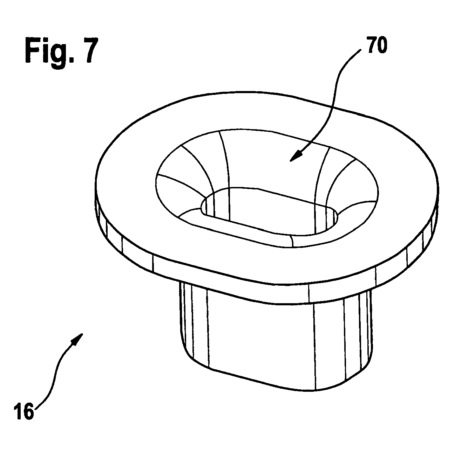

Die Distanzhülse 16 weist ein Innenloch 70 (siehe Fig. 7) auf, das sich rohrförmig zum Karosserieblech erstreckt. Dadurch vermeidet die Distanzhülse 16 eine zu starke Kompression des Gummipuffers 15, wenn der Schnapphebel 14 nach rechts in seine Schließstellung verschwenkt wird.

## Patentansprüche

1. Scheibenwischvorrichtung, insbesondere für ein Kraftfahrzeug, mit einer Befestigungseinrichtung (10) zur Befestigung der Scheibenwischvorrichtung am Kraftfahrzeug, so dass die Scheibenwischvorrichtung durch die Befestigungseinrichtung (10) an einem Karosserieblech (13) einer Fahrzeugkarosserie festklemmbar ist, **dadurch gekennzeichnet, dass** die Befestigungseinrichtung (10) zum Festklemmen einen Schnapphebel (14), insbesondere aus Kunststoff aufweist, der mittels einer in einem Bügel (32) gelagerten Achse (17) exzentrisch und verschwenkbar gelagert ist.

2. Scheibenwischvorrichtung nach Anspruch 1, **dadurch gekennzeichnet, dass** die Befestigungseinrichtung (10) mindestens ein federndes Klemmelement (12) aufweist, das insbesondere mit mindestens zwei Führungsflächen (30, 40) versehen ist.

3. Scheibenwischvorrichtung nach Anspruch 2, **dadurch gekennzeichnet, dass** die Führungsflächen (30, 40) gegeneinander bewegbar angeordnet sind.

4. Scheibenwischvorrichtung nach Anspruch 3, **dadurch gekennzeichnet, dass** der Bügel (32) einen gewellten Bereich (33) aufweist.

5. Scheibenwischvorrichtung nach einem der Ansprüche 1 bis 4, **dadurch gekennzeichnet**, das die Befestigungseinrichtung (10) mindestens einen Gummipuffer (15) und/oder eine Distanzhülse (16) aufweist.

6. Scheibenwischvorrichtung nach Anspruch 5, **dadurch gekennzeichnet, dass** die Distanzhülse (16) ein Innenloch (70) aufweist, das sich rohrförmig zum Karosserieblech (13) hin erstreckt.

7. Scheibenwischvorrichtung nach einem der Ansprüche 1 bis 6, **dadurch gekennzeichnet, dass** der Schnapphebel (14) von länglicher Gestalt ist und durch eine Bewegung, insbesondere zwischen 40° und 100°, vorzugsweise zwischen 45° und 90°, quer zu seiner Längsachse arretierbar ist.

8. Scheibenwischvorrichtung nach einem der Ansprüche 1 bis 7, **dadurch gekennzeichnet, dass** der Schnapphebel (14) Stützflächen (61, 62) aufweist, um ihn in einer Schließstellung oder in einer Montagestellung zu arretieren.

9. Scheibenwischvorrichtung nach einem der Ansprüche 1 bis 8, **dadurch gekennzeichnet, dass** das Klemmelement (12) mindestens ein Federbein (41) aufweist, das in eine Aussparung (50) im Karosserieblech (13) des Kraftfahrzeuges einrastbar ist.

10. Scheibenwischvorrichtung nach einem der Ansprüche 1 bis 9, **dadurch gekennzeichnet, dass** der Schnapphebel (14) mit einem Haken (60) versehen ist.

11. Scheibenwischvorrichtung nach einem der Ansprüche 1 bis 10, **dadurch gekennzeichnet, dass** die Führungsflächen (30, 40) an ihrer jeweils einander zugewandten Seite angerauht sind.

12. Scheibenwischvorrichtung nach einem der Ansprüche 1 bis 11, **dadurch gekennzeichnet**, das der Schnapphebel (14) aus einem unverstärkten oder faserverstärkten Kunststoff oder aus einem Metalldruckguss hergestellt ist.

13. Scheibenwischvorrichtung nach einem der Ansprüche 1 bis 12, **dadurch gekennzeichnet, dass** die Befestigungseinrichtung (10) an einem Formrohr (11) angeordnet ist.

## Claims

1. Windscreen wiper device, in particular for a motor vehicle, with a fastening device (10) for fastening the windscreen wiper device to the motor vehicle such that the windscreen wiper device can be clamped to a body sheet (13) of a vehicle body by the fastening device (10), **characterized in that**, for the clamping, the fastening device (10) has a snap-action lever (14), in particular made of plastic, which is mounted eccentrically and pivotably by means of a spindle (17) mounted in a bow (32).

2. Windscreen wiper device according to Claim 1, **characterized in that** the fastening device (10) has at least one resilient clamping element (12) which is provided in particular with at least two guide surfaces (30, 40).

3. Windscreen wiper device according to Claim 2, **characterized in that** the guide surfaces (30, 40) are arranged in a manner such that they are movable towards each other.

4. Windscreen wiper device according to Claim 3, **characterized in that** the bow (32) has a wavy region (33).

5. Windscreen wiper device according to one of Claims 1 to 4, **characterized in that** the fastening device (10) has at least one rubber buffer (15) and/or spacer sleeve (16).

6. Windscreen wiper device according to Claim 5, **characterized in that** the spacer sleeve (16) has an inner hole (70) which extends in a tubular manner towards the body sheet (13).

7. Windscreen wiper device according to one of Claims 1 to 6, **characterized in that** the snap-action lever (14) is of elongate design and can be locked by means of a movement, in particular of between 40° and 100°, preferably between 45° and 90°, transversely with respect to its longitudinal axis.

8. Windscreen wiper device according to one of Claims 1 to 7, **characterized in that** the snap-action lever (14) has supporting surfaces (61, 62) in order to lock it in a closed position or in an installation position.

9. Windscreen wiper device according to one of Claims 1 to 8, **characterized in that** the clamping element (12) has at least one spring leg (41) which can be latched into a cutout (50) in the body sheet (13) of the motor vehicle.

10. Windscreen wiper device according to one of Claims 1 to 9, **characterized in that** the snap-action lever (14) is provided with a hook (60).

11. Windscreen wiper device according to one of Claims 1 to 10, **characterized in that** the sides of the guide surfaces (30, 40) which face each other are roughened.

12. Windscreen wiper device according to one of Claims 1 to 11, **characterized in that** the snap-action lever (14) is produced from an unreinforced or fibre-reinforced plastic or from a metal die casting.

13. Windscreen wiper device according to one of Claims 1 to 12, **characterized in that** the fastening device (10) is arranged on a shaped tube (11).

## Revendications

1. Dispositif d'essuie-glace, notamment pour un véhicule automobile, comprenant un dispositif de fixation (10) pour la fixation du dispositif d'essuie-glace sur le véhicule automobile, de sorte que le dispositif d'essuie-glace puisse être serré fixement par le dispositif de fixation (10) à une tôle de la carrosserie (13) d'une carrosserie du véhicule, **caractérisé en ce que** le dispositif de fixation (10) présente, pour le serrage fixe, un levier d'encliquetage (14), notamment en plastique, qui est monté de manière excentrée et pivotante au moyen d'un axe (17) monté dans un arceau (32).

2. Dispositif d'essuie-glace selon la revendication 1, **caractérisé en ce que** le dispositif de fixation (10) présente au moins un élément de serrage (12) élastique qui est pourvu notamment d'au moins deux surfaces de guidage (30, 40).

3. Dispositif d'essuie-glace selon la revendication 2, **caractérisé en ce que** les surfaces de guidage (30, 40) sont disposées de manière déplaçable l'une par rapport à l'autre.

4. Dispositif d'essuie-glace selon la revendication 3, **caractérisé en ce que** l'arceau (32) présente une région ondulée (33).

5. Dispositif d'essuie-glace selon l'une quelconque des revendications 1 à 4, **caractérisé en ce que** le dispositif de fixation (10) présente au moins un tampon en cautchouc (15) et/ou une douille d'écartement (16).

6. Dispositif d'essuie-glace selon la revendication 5, **caractérisé en ce que** la douille d'écartement (16) présente un trou interne (70) qui s'étend en forme de tube vers la tôle de la carrosserie (13).

7. Dispositif d'essuie-glace selon l'une quelconque des revendications 1 à 6, **caractérisé en ce que** le levier d'encliquetage (14) a une forme allongée et peut être bloqué transversalement à son axe longitudinal par un déplacement, notamment entre 40° et 100°, de préférence entre 45°et 90°.

8. Dispositif d'essuie-glace selon l'une quelconque des revendications 1 à 7, **caractérisé en ce que** le levier d'encliquetage (14) présente des surfaces de support (61, 62) pour le bloquer dans une position de fermeture ou une position de montage.

9. Dispositif d'essuie-glace selon l'une quelconque des revendications 1 à 8, **caractérisé en ce que** l'élément de serrage (12) présente au moins une jambe de force (41), qui peut être encliquetée dans un évidement (50) dans la tôle de la carrosserie (13) du véhicule automobile.

10. Dispositif d'essuie-glace selon l'une quelconque des revendications 1 à 9, **caractérisé en ce que** le levier d'encliquetage (14) est pourvu d'un crochet (60).

11. Dispositif d'essuie-glace selon l'une quelconque des revendications 1 à 10, **caractérisé en ce que** les surfaces de guidage (30, 40) sont rendues rugueuses au niveau de leurs côtés tournés l'un vers l'autre.

12. Dispositif d'essuie-glace selon l'une quelconque des revendications 1 à 11, **caractérisé en ce que** le levier d'encliquetage (14) est fabriqué en un plastique non renforcé ou renforcé par des fibres ou en une fonte de métal sous pression.

13. Dispositif d'essuie-glace selon l'une quelconque des revendications 1 à 12, **caractérisé en ce que** le dispositif de fixation (10) est disposé sur un tube moulé (11).
